# EUROPEAN PATENT APPLICATION

(11) **EP 3 932 363 A1**
(43) Date of publication of application: **05.01.2022**
(21) Application number: 20184074.1
(22) Date of filing: 03.07.2020
(51) Int. Cl.: A61C 8/00

(54) **THREADLESS DENTAL IMPLANT HAVING ATTACHMENT TEETH AND METHOD OF ATTACHMENT OF A THREADLESS DENTAL IMPLANT**

(71) Applicant: Ruetschi Technology SA, 3286 Muntelier (CH)
(72) Inventor: CHENAUX, David, 2035 Corcelles (CH); RUETSCHI, Christoph, 3280 Murten (CH); BOILLAT, Bastien, 1489 Murist (CH)
(74) Representative: Grosfillier, Philippe

(57) **Abstract**

A jaw bone anchor for threadless engagement with a jaw bone, the jaw bone anchor having an apical side, a crown-facing side, and having a root section, the jaw bone anchor including an inner core having a longitudinal extension along the root section, an outer osso-integrative shell layer that is arranged around the inner core, and a plurality of radially-extending bone engaging elements, the radially-extending bone engaging elements extending from the inner core, traversing and protruding from the outer osso-integrative shell layer.

## Description

### FIELD OF THE INVENTION

The present application is directed to the field of dental implants, the field of manufacturing dental implants, and field of dental implant systems and methods of implanting a dental implant to a jaw bone.

### BACKGROUND

In the field of dental implants, the state of the art has proposed some devices that do not rely on a threading for attachment to a jaw bone. For example, U.S. Patent No. 8,167,619 is directed to an expandable dental implant having an envelope 1 with narrow longitudinal slits 19 to form deformable clasps 21, and conical expander member 20 arranged inside envelope 1, such that elastically deformable clasps 21 are adapted to expand laterally outwards as an expander 20 is longitudinally displaced by a displacing means along the main longitudinal axis of the implant towards the apical end. As expander member 20 is coronally displaced, clasps 21 are gradually urged apically outwards. Substantially radial forces applied to expander 20 by each leg at corresponding contact points B' and C' prevent the expander member from being apically displaced. When the displacing means is detached from the expander 20, the expander 20 is immobilized, and will not be loosened over the course of time.

U.S. Patent No. 6,273,720 is directed to a dental implant system including an implant 10 having a narrow gauge body 12 which is press fitted into a receptor site formed in the jawbone 14 of a dental patient. Before installation of the implant 10 an incision is made in the gum tissue of the patient and the underlying bone is exposed. A drill having a drill bit of a configuration matching the configuration of the implant is used to bore a hole in the jawbone 14 of a size slightly smaller than the circumference of the implant body 12. This permits the implant 10 to be press fitted into the bored hole. The exterior of the implant body 12 should preferably have a plurality of serrations 24 which are spaced longitudinally apart along the vertical height of the implant 10 to facilitate the seating of a plasma sprayed coating of hydroxyl apatite "HA" before the implant 10 is press fitted into the jawbone 14.

Brazilian Patent Application No. 202012010880 discusses a threadless dental implant having a straight horizontal base 2, from which cylindrical pillars 3 vertically project upwardly parallel to each other, the horizontal base 2 and the cylindrical pillars 3 forming a U-shape, wherein the pillars 3 have central channels 4 with a rectangular upper profile, for receiving a slap implant 5 and abutment elements 6.

U.S. Patent Publication No. 2010/0114314 is directed to a dental implant 10 has a rigid member 12, and an expandable, porous member 14. The porous member 14 engages an apical or distal end portion 18 of the rigid member 12 when it is placed in a bore in bone. With this structure, a longitudinal force may be applied to the rigid member 12 so that the rigid member 12 impacts against the porous member. This driving force causes the porous member 14 to expand radially outward into the surrounding bone of the surgical site.

U.S. Patent Publication No. 2010/0047741 describes a dental implant carrier 6 is made in two parts that includes a base body 7 with its laterally projecting expanding parts 8a and 8b which are made in spring-elastic form and whose spring force acts radially outwardly under load.

European Patent Application No. EP19201095.7, this reference herewith incorporated by reference in its entirety, describes another threadless dental implant bone anchor and corresponding system, that relies on a conically-shaped meshed wall as a bone-facing implant element that can be expanded to engage with the jaw bone, and uses an expansion tool to provide for the radial expansion, for improved fastening and ossointegration with the jaw bone.

Despite all the progress made in the field of dental implants, and attempts having been made to find solutions with threadless dental implants, strongly improved dental implants are desired that do not rely on a threading for threadable attachment and also do not rely on bone compression or pressure mechanisms to the native jaw bone, to improve mechanical attachment and its durability, improve bone healing, osso-integration, for simplified and efficient handling of the dental implant, to shorten preparation time, reduce risks of bone fractures during the implanting process, and to provide for a cost-effective solution.

### SUMMARY

According to an aspect of the present invention, a jaw bone anchor for threadless engagement with a jaw bone is provided, the jaw bone anchor having an apical side, a crown-facing side, and having a root section. Preferably, the jaw bone anchor includes an inner core having a longitudinal extension along the root section, an outer osso-integrative shell layer that is arranged around the inner core, and a plurality of radially-extending bone engaging elements, the radially-extending bone engaging elements extending from the inner core, traversing and protruding from the outer osso-integrative shell layer.

According to another aspect of the present invention, a dental implant system is provided, preferably including a crown, a dental abutment, a jaw bone anchor for threadless engagement with a jaw bone, and an attachment device for attaching the dental abutment to the jaw bone anchor. Moreover, preferably, the jaw bone anchor has an apical side, a crown-facing side, and extending along a root section, and the jaw bone anchor preferably includes an inner core having a longitudinal extension along the root section, an outer osso-integrative shell layer that is arranged around the inner core, a plurality of radially-extending bone engaging elements, the radially-extending bone engaging elements extending from the inner core, traversing the outer osso-integrative shell layer, and an attachment mechanism that is accessible via the crown-facing side for attachment of the dental abutment with the attachment device.

According to another aspect of the present invention, a jaw bone anchor for a dental implant is provided. Preferably, the jaw bone anchor includes an apical side, a crown-facing side, and a root section, the jaw bone anchor includes an inner stabilizing means extending along the root section, an outer osso-integrative means surrounding the inner stabilizing means, and a plurality of radially-extending bone engaging means, the radially-extending bone engaging means extending from the inner stabilizing means and traversing and protruding from the outer osso-integrative means, wherein the inner stabilizing means and the plurality of radially-extending bone engaging means are configured to provide for a primary stability of the jaw bone anchor before ossointergration.

According to still another aspect of the present invention, a method for anchoring a threadless dental implant to a jaw bone drill hole is provided. Preferably, the method includes a step of drilling a jaw bone drill hole to a target dental implant location, the jaw bone drill hole having a complementary shape to a shape of the root section of a jaw bone anchor, the jaw bone drill hole having a diameter that is wider than corresponding portions of the jaw bone anchor, inserting the jaw bone anchor into the jaw bone drill hole, such that radially-extending or protruding bone engaging elements engage with native bone structure of the jaw bone inside the jaw bone drill hole, while preserving a gap between a cylindrical, conical, or combined cylindrical-conical outer osso-integrative shell layer and a bone surface of the jaw bone drill hole, to provide for a primary stability of jaw bone anchor relative to the jaw bone before the osso-integration phase of the jaw bone anchor.

The above and other objects, features and advantages of the present invention and the manner of realizing them will become more apparent, and the invention itself will best be understood from a study of the following description with reference to the attached drawings showing some preferred embodiments of the invention.

### BRIEF DESCRIPTON OF THE SEVERAL VIEWS OF THE DRAWINGS

The accompanying drawings, which are incorporated herein and constitute part of this specification, illustrate the presently preferred embodiments of the invention, and together with the general description given above and the detailed description given below, serve to explain features of the invention.

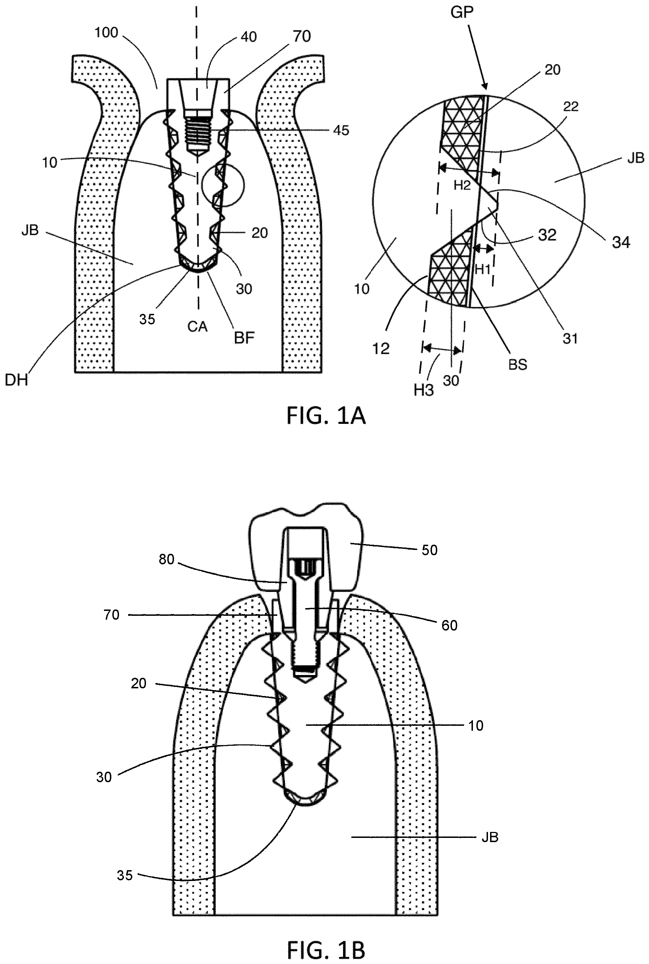

FIGs. 1A and 1B exemplary illustrate a cross-sectional view of the jaw bone anchor 100 and a cross-sectional view of a corresponding dental implant system 200, respectively, with FIG. 1A showing anchor 100 placed into a drill hole DH of a jaw bone JB, jaw bone anchor 100 being implantable part or element for ossointegration of a dental implant system 200, having an apical side and a crown-facing side, and having a central axis CA that extends along the root section, the crown-facing side of jaw bone anchor 100 having an opening 40 and an attachment element or mechanism 45 within a neck 70 at the crown-facing side, mechanism 45 preferably implemented as a threading, jaw bone anchor 100 further having an inner core 10 or an inner stabilizing means, and an outer osso-integrative shell layer 20 or osso-integration means, and having radially-protruding bone-engaging elements 30 along the root section that protrude radially in a direction from central axis CA from the inner core 10 and traverse and protrude from outer osso-integrative shell layer 20, and on the right side of FIG. 1A a close-up view is shown of the circle that shows an apex or summit portion 31 of bone-engaging elements 30 penetrating into the bone structure of jaw bone JB, and FIG. 1B showing a crown 50, dental abutment 80, attachment device 60 for example but not limited to a screw with a head and a threading, and anchor 100, connected to each other, according to one aspect of the present invention;

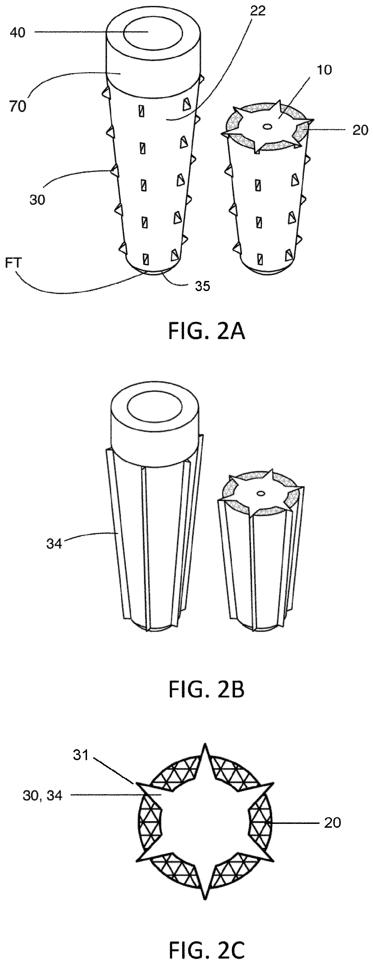

FIG. 2A-2B show perspective-top views of two different jaw bone anchors 100 with different types of radially-protruding bone engaging elements 30, and FIG. 2C shows a cross-sectional view of along the central axis CA thereof, the left side of FIGs. 2A and 2B showing the entire jaw bone anchors 100 with crown-facing opening 40, the right side of FIGs. 2A and 2B showing a cut-off lower section of jaw bone anchors 100 for illustration purposes with a virtual cutting plane that is perpendicular to central axis CA, FIG. 2A showing radially-protruding bone engaging elements 30 formed as protruding pyramidal-shaped teeth that are arranged equidistantly on substantially axially-extending lines, that axial extending lines tilted versus central axis CA opening towards the crown-facing side, with an angular offset of 60° degrees between adjacent lines, FIG. 2A showing radially-protruding structuration elements 30 formed as protruding pyramidal-shaped elements as teeth 30 that are arranged equidistantly on substantially axially-extending inclined or tilted arrangement lines, six (6) exemplary arrangement lines being shown, the axial extending lines tilted versus central axis CA opening towards the crown-facing side, with an angular offset of 60° degrees between adjacent arrangement lines, and FIG. 2B showing radially-protruding structuration elements 30 formed as protruding ridges 34 having a triangular cross-section, with an angular offset of 60° degrees between adjacent ridges;

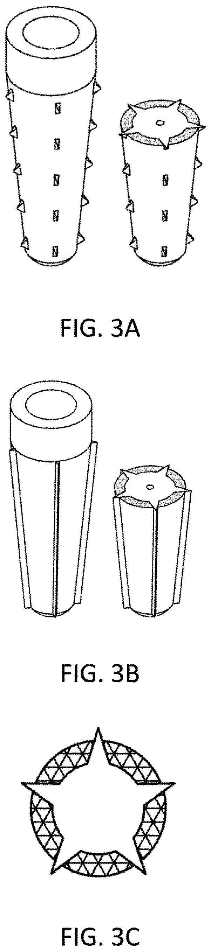

FIG. 3A-3B show perspective-top views of two different jaw bone anchors 100 with protruding pyramidal-shaped teeth 30 (FIG. 3A) and with protruding ridges 34 (FIG. 3B), and FIG. 3C shows a cross-sectional view of along the central axis CA thereof, five (5) exemplary arrangement lines for bone engaging teeth 30 and bone engaging ridges 34 are shown with an angular offset of 72° degrees between adjacent arrangement lines;

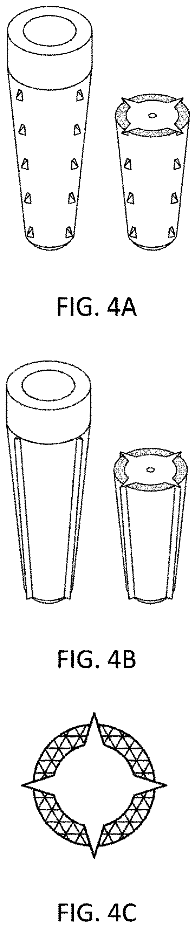

FIG. 4A-4B show perspective-top views of two different jaw bone anchors 100 with protruding pyramidal-shaped teeth 30 (FIG. 4A) and with protruding ridges 34 (FIG. 4B), and FIG. 4C shows a cross-sectional view of along the central axis CA thereof, four (4) exemplary arrangement lines for teeth 30 and ridges 34 are shown with an angular offset of 90° degrees between adjacent arrangement lines;

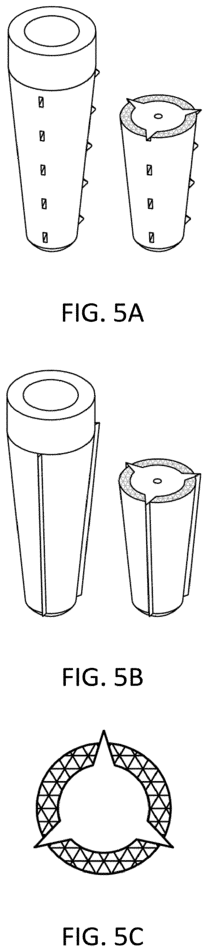

FIG. 5A-5B show perspective-top views of two different jaw bone anchors 100 with protruding pyramidal-shaped teeth 30 (FIG. 5A) and with protruding ridges 34 (FIG. 5B), and FIG. 5C shows a cross-sectional view of along the central axis CA thereof, three (3) exemplary arrangement lines for teeth 30 and ridges 34 are shown with an angular offset of 120° degrees between adjacent arrangement lines;

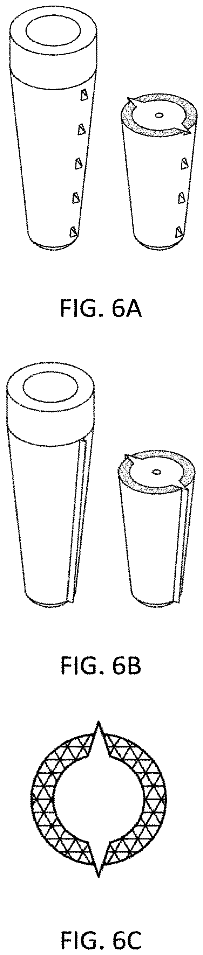

FIG. 6A-6B show perspective-top views of two different jaw bone anchors 100 with protruding pyramidal-shaped teeth 30 (FIG. 6A) and with protruding ridges 34 (FIG. 6B), and FIG. 6C shows a cross-sectional view of along the central axis CA thereof, two (2) exemplary arrangement lines for teeth 30 and ridges 34 are shown with an angular offset of 180° degrees between adjacent arrangement lines, radially facing each other;

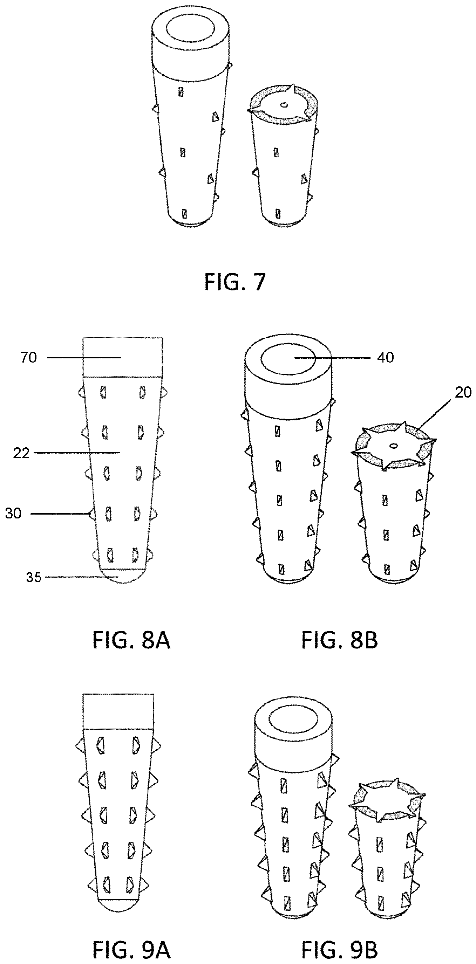

FIG. 7 show perspective-top views of a jaw bone anchor 100, on the left side of showing the entire jaw bone anchors 100 with crown-facing opening 40, and on the right side showing a cut-off lower section of jaw bone anchors 100 for illustration purposes with a virtual cutting plane that is perpendicular to central axis CA, protruding pyramidal-shaped teeth 30 spaced apart from each other equidistantly in an axially-tilted direction along the arrangement lines, but with an alternating arrangement of teeth 30 of adjacent axially-tilted arrangement lines around the central axis CA, such that teeth 30 of adjacent axially-tilted arrangement lines are offset to each other;

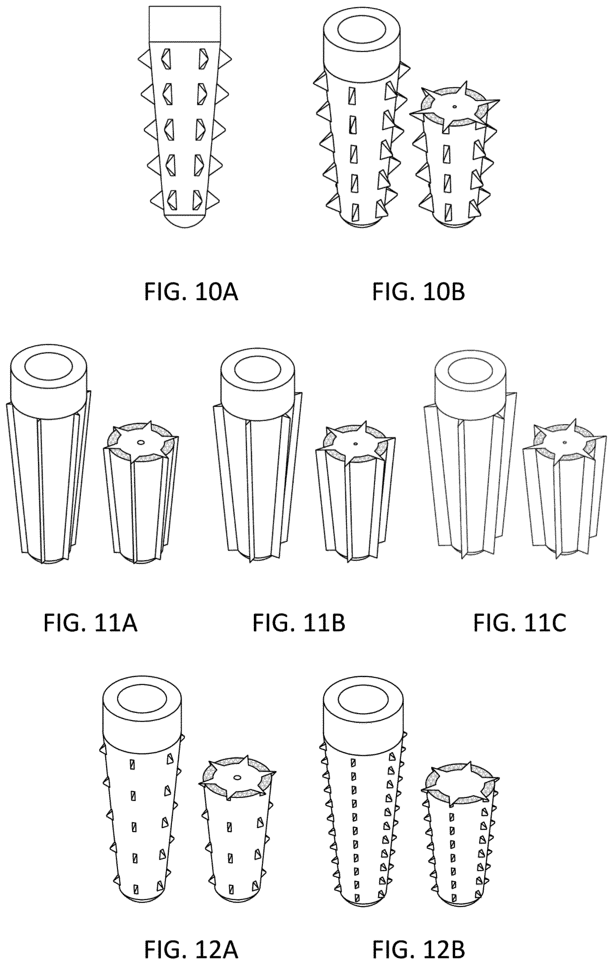

FIGs. 8A and 8B show a side view (FIG. 8A) and a perspective-top view and a perspective-top cut view (FIG. 8B) of a jaw bone anchor 100 with relatively small-sized radial protrusion heights of teeth 30, FIGs. 9A and 9B show a side view (FIG. 9A) and a perspective-top view and a perspective-top cut view (FIG. 9B) of a jaw bone anchor 100 with relative mid-sized radial protrusion heights of teeth 30, and FIGs. 10A and 10B show a side view (FIG. 8A) and a perspective-top view and a perspective-top cut view (FIG. 10B) of a jaw bone anchor 100 with relative large-sized radial protrusion heights of teeth 30;

FIGs. 11A, 11B, and 11C each show a perspective-top view on the left side and a perspective-top cut view on the right side of ridges 34 with small-sized, mid-sized, or large-sized radial protrusion heights, respectively;

FIGs. 12A and 12B show an exemplary perspective-top view on the left side and a perspective-top cut view on the right side of a jaw bone anchor 100 that show different densities or pitches of teeth along exemplary six (6) arrangement lines;

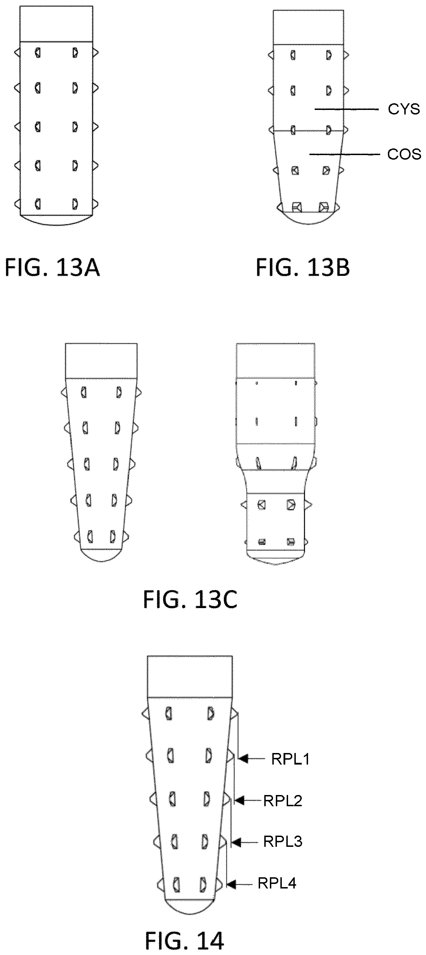

FIGs. 13A, 13B, 13C, and 13D show side views of different embodiments where the outer surface of jaw bone anchor 100 that face the jaw bone JB, along the root-facing portion, is cylindrically-shaped (FIG. 13A), is partially cylindrically-shaped at the crown-facing side and partially conically-shaped at the apical side (FG. 13B), is conically-shaped (FIG. 13C), and is randomly-shaped with increasing diameter towards the crown side (FIG. 13D).

FIG. 14 shows a side view of conically-shaped jaw bone anchor 100 indicating the different radial protrusion lengths as compared to the central axis CA, with an increasing radial protrusion length of teeth 30 that are arranged closer to the crown-facing side, by virtue of the conical shape of the root-facing portion of jaw bone anchor 100; and

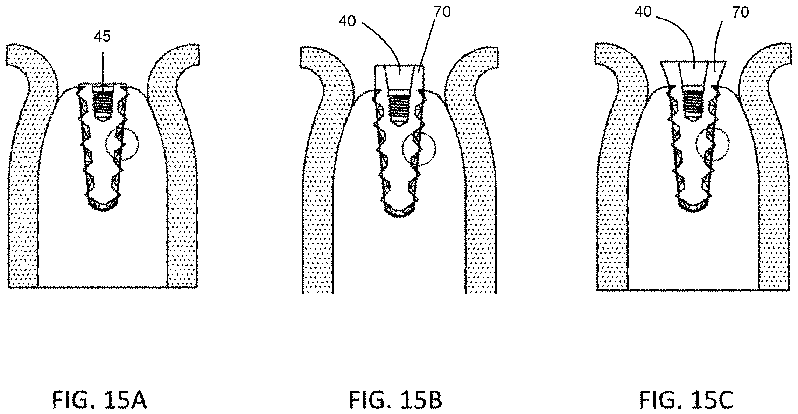

FIGs. 15A, 15B, and 15C show cross-sectional side views of jaw bone anchor 100 and jaw bone JB having different mechanical interfaces to for holding a crown, with no neck for an exemplary bone level implant that is neatly fully inserted to the jaw bone JB (FIG. 15A), having a neck with an outer cylindrical surface as an exemplary tissue-level implant (FIG. 15B), and having a tulip-shaped polished neck as an exemplary tissue-level implant at the bone level implant (FIG. 15C); and

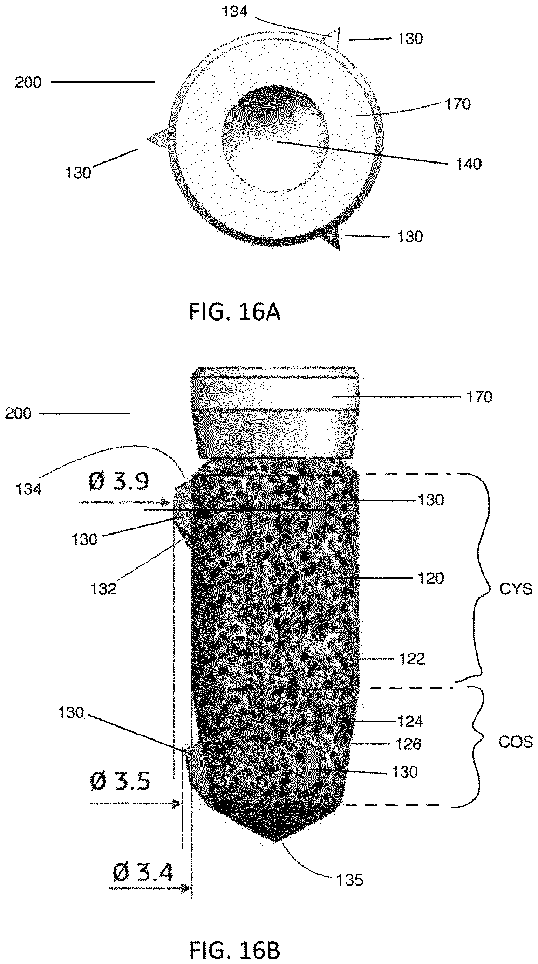

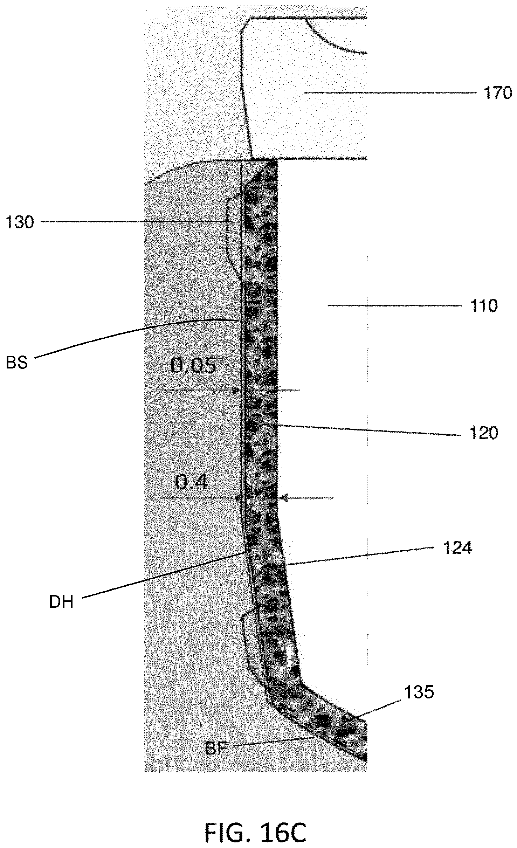

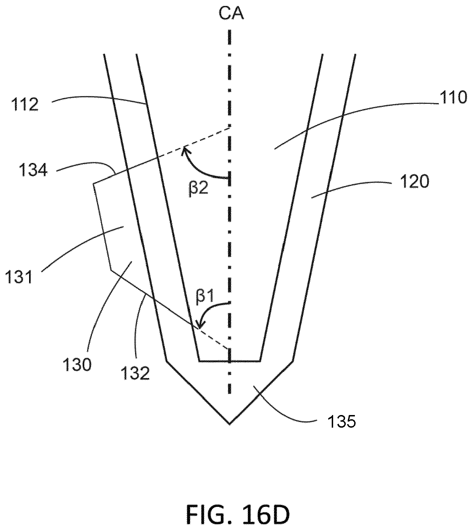

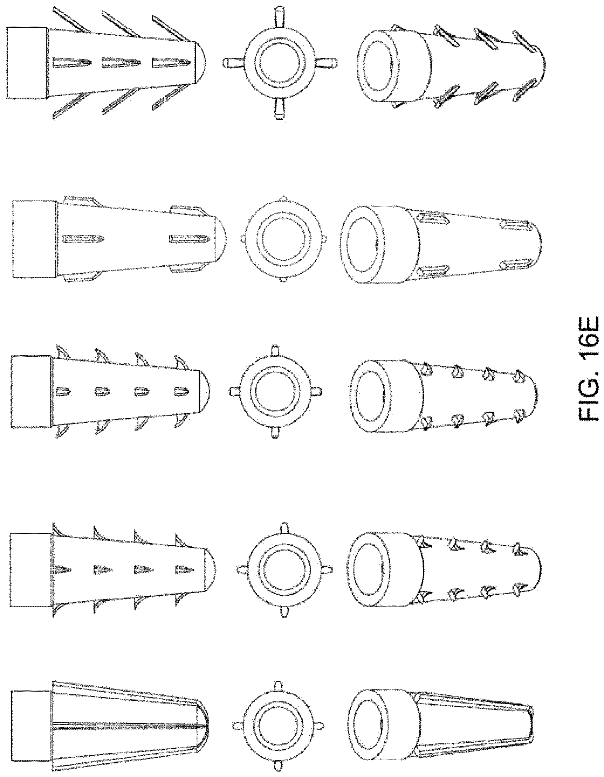

FIG. 16A to 16E shows different views of another embodiment of the present invention, showing a jaw bone anchor 200, having a apical side with an upper cylindrically-shaped section CYS and a lower conically-shaped section COS, with FIG. 16A showing a top view thereof, FIG. 16B showing a side view thereof, and FIG. 16C showing a cross-sectional side view thereof, with specific exemplary dimensions, and FIG. 16D showing a close-up cross-sectional view of bone engaging element 130, and FIG. 16E showing different variations of the shape and structure of the bone engaging elements 30, having a ramp structure, tab structure, hook structure, claw structure.

Herein, identical reference numerals are used, where possible, to designate identical elements that are common to the figures. Also, the images are simplified for illustration purposes and may not be depicted to scale.

### BRIEF DESCRIPTION OF THE SEVERAL EMBODIMENTS

According to some aspects of the present invention, as shown in FIG. 1A that exemplary and schematically illustrates a cross-sectional view of the jaw bone anchor 100 placed into a drill hole DH of a jaw bone JB of a subject, living being, or dental patient, jaw bone anchor 100 being implantable part or element for ossointegration of a dental implant system 200, and FIG. 1B that illustrates a cross-sectional view of a corresponding dental implant system 200, a dental jaw bone anchor 100 is provided having an apical side and a crown-facing side, and having a central axis CA that extending along the root section. Jaw bone JB may include the upper jaw bone, the maxilla, and/or the lower jaw bone, the mandible.

The crown-facing side of jaw bone anchor 100 includes a neck 70 having an opening 40, for example an opening having an upper conically-shaped recess for engaging with a dental abutment 80, and an attachment element or mechanism 45, preferably a threading for engagement with a corresponding threading of an attachment device 60, preferably a screw with a head and complementary threading. Jaw bone anchor 100 further includes an inner core 10 having an outer surface 12, core 10 preferably made of a solid material, for example such that no voids or cavities are formed in the material of core 10, and an outer osso-integrative shell layer 20, preferably made of a material that can provide for ossointegration, for example a titanium-based material, for example but not limited to a commercially pure titanium, titanium alloys, titanium nitride (TiN). Moreover, at least the bone-facing outer surface 22 of the osso-integrative shell layer 20 is porous, for example by having a trabecular structuration. In terms of porosity, the osso-integrative shell layer can have a porosity of about 40% to 60% in terms of a fraction of the volume of voids over the total volume, and can have an average pore size in a range between 100 µm and 500 µm, more preferably between 300 µm and 400 µm. A thickness H3 of a wall formed by the osso-integrative shell layer 20 can have a thickness between 0.1 mm and 1mm, more preferably about 0.2 mm to 0.6 mm.

Jaw bone anchor 100 further includes radially-protruding bone-engaging elements 30 along the root section or the jaw-bone facing section, bone engaging elements that protrude in a direction that is radially away from central axis CA from inner core 10 and are traversing the outer osso-integrative shell layer 20, such that an apex, tip, or summit 31 of bone-engaging elements 30 protrude away from bone-facing outer surface 22 of the osso-integrative shell layer 20, for example by a height H1 of about 0.1 mm to 1 mm, while having an entire height H2 that is measured from outer surface 12 of inner core 10 that is preferably about in a range between 0.2 mm to 2 mm. Once jaw bone anchor 100 is placed into drilling hole DH of jaw bone JB at its final position for ossointegration purposes, apexes or summits 31 of bone-engaging elements 30 will penetrate into the bone structure of jaw bone JB by about 50% to 99% of its height H as shown on the right hand side of FIG. 1A. Moreover, jaw bone anchor 100 includes a front tip 35 having a shape to facilitate insertion into drilling hole DH, for example but not limited to a conically-shaped, spherically-shaped, pointed, or slanted tip. In the variant shown, front tip 35 has a porous surface like the outer surface 12 of osso-integrative shell layer 20, and can have a continuous structure with osso-integrative shell layer 20.

The relative and absolute dimensions of inner core 10 and the bone engaging elements 30 as well as osso-integrative shell layer 20 are designed such that, during a placement of jaw bone anchor 100 into hole drill hole DH, tips 31 of bone engaging elements 30 will engage into bone structures of bone surfaces BS inside drill hole DH with a certain height or depth, and tips 31 of bone engaging elements 30 will move downwards and slide within bone structure. Once placed at a position of ossointegration of jaw bone anchor 100, tips 31 of bone engaging elements 30 will remain in bone structures of bone surfaces BS with a certain height or depth HI, and simultaneously, outer surface 22 of osso-integrative shell layer 20 will not exert any or only very little pressure to surrounding bone surfaces BS of bone structures of jaw bone JB of drill hole DH. In this respect, tips 31 of bone-engaging elements 30 are such that they fully protrude radially away from outer surface 12 of inner core 10 through osso-integrative shell layer 20 from inner core 10 with height H2 that is larger than height H3.

Specifically, dimensions of outer surface 22 of osso-integrative shell layer 20 and dimensions of drill hole DH are designed remain at a distance or gap GP between outer surface 22 and bone surface BS, to thereby prevent generating any or only little bone compression during the osso-integration phase and healing, which can in turn avoid a bone resorption phase at the beginning of the healing for implantation. In this respect, a drill hole DH is drilled into the jaw bone JB in preparation of the jaw bone anchoring that has a diameter that is slightly larger than a diameter of the jaw bone anchor 100 at a corresponding depth into the drill hole DH, when jaw bone anchor 100 is placed at the final, osso-integration position, the diameter being two times a distance or gap GP. Moreover, it is possible that tip 35 of jaw bone anchor 100 can be contact with a bone floor BF of drill hole DH, but without exerting pressure on to the bone floor BF. This allows to limit a penetration depth of jaw bone anchor 100 along axis CA into drill hole DH. Gap GP that will form a cylindrical, conical, or combined cylindrical-conical wall shape, can be filled with an ossointegration paste, with blood, or ossointegration-enhancing active agents, or combination thereof, for aiding the osso-integration of osso-integrative shell layer 20 to the surrounding bone structures BS.

The radially-extending bone engaging elements 30 are configured and designed to allow for a secure insertion of jaw bone anchor 100 into drill hole DH and for engagement and partial penetration of tips 31 with jaw bone JB when jaw bone anchor 100 is pressed into DH along axis CA. In addition, by virtue of the mechanical interconnection between bone engaging elements 30 with inner core 10, both preferably made of solid material, upon insertion of jaw bone anchor 100 to a desired target position of the dental implant, elements 30 and core 10 are configured to give jaw bone anchor 100 the necessary primary stability to with localized bone compression by tips 31 at least partially engaging into jaw bone JB, to enable ossointegration between shell layer 20 and bone surface BS of jaw bone JB. At the same time, bone engaging elements 30 prevent rotation or turning of jaw bone anchor 100 relative to jaw bone JB around center axis CA. In this respect, with a substantial equal distribution of bone engaging elements 30 around outer surface of bone anchor 100 together with a protruding height H1 of tips 31 of bone engagement elements 30 in a radial direction away from outer surface 22 of osso-integrative shell layer 20, at time of placing jaw bone anchor 100 to drill hole DH by pressing anchor 100 along axis CA into drill hole DH, tips 31 of bone engaging elements 30 will permit a centering of jaw bone anchor 100 with respect to the rotational center axis CA of drill hole DH.

With respect to the mechanical separation of inner core 10 and bone engaging elements 30 made of solid material, and osso-integrative shell layer 20 having at least its outer surface 22 being porous, for example a trabecular structure, it is possible to mechanically separate two functions of the jaw bone anchor 100, providing for substantial advantages over the state of the art. First, with the solid inner core 10 and bone engaging elements 30, primary stability to jaw bone anchor 100 is provided for the time after insertion of jaw bone anchor 100 to drill hole DH, but before the ossointegration of jaw bone anchor 100 has taken place. Structure and arrangement of bone engaging elements 30 also allow to provide for substantial resistance against rotation or turning of jaw bone anchor 100 relative to jaw bone JB even before ossointegration, as further discussed below. Second, virtue of the gap GP that minimizes or even disallows contact between outer surface 22 of osso-integrative shell layer 20, no compressive force is exerted on bone surface BS of drill hole DH, and thereby does not cause any native bone compression. This feature in turn allows to minimize pressure necrosis and bone resorption of the jaw bone structures to a maximum, and can entirely avoid it. See for example, Bashutski, Jill D., Nisha J. D'Silva, and Horn-Lay Wang., "Implant Compression Necrosis: Current Understanding and Case Report," Journal of Periodontology, Vol. 80, No. 4, 2009, pp. 700-704, see also Nevins, Myron, Marc L. Nevins, Peter Schupbach, Joseph Fiorellini, Zhao Lin, and David M. Kim, "The Impact of Bone Compression on Bone-to-Implant Contact of an Osseointegrated Implant: a Canine Study," International Journal of Periodontics & Restorative Dentistry, Vol. 32, No. 6, 2012. This feature in turn will allows for a shorter period of ossointegration of the jaw bone anchor 100. In other words, despite avoiding nearly all bone compression on a surface level of bone surface BS of native drill hole DH, a very strong primary stability is achieved by a few bone engaging elements 30 having a limited surface or volume of impact to the native j aw bone, only establishing a very limited local compression to native jaw bone JB, and at the same time, a fast and strongly improved ossointegration is possible. In addition, no elements are used with jaw bone anchor 100 that will expand to cause a critical compression to bone structures, to provide for a solid, non-expanding anchor 100. This is a substantial improvement over existing jaw bone anchors that use a bone threading creating a highly compressive force with the threads to the bone, for example tapped, self-tapping or self-cutting types, or other type of jaw bone anchors using expanding hooks or jaws for primary, pre-ossointegration bone anchoring.

FIG. 1B shows a dental prosthesis or implant system or device 200 that includes the above-described jaw bone anchor 100, a crown 50, dental abutment 80, attachment device 60 for example but not limited to a screw having a threading to engage with a corresponding threading of attachment element or mechanism 45 of jaw bone anchor 100, all connected to each other, according to one aspect of the present invention. Preferably, the crown-facing section of neck 70 with opening 40 forms a conical surface, and apical section of dental abutment 80 forms a corresponding conical surface for strong complementary engagement of these conical surfaces.

For example, in the example shown in FIG. 2A, exemplarily (6) six rows of bone engaging elements 30 are shown, having exemplarily a count or number of five (5) bone engaging elements per row, the rows being radially equally spaced apart by 60° degrees, bone engaging elements 30 having pyramidal shape, a base of the pyramid being substantially rectangular. Generally, a count or number of bone engaging elements 30, placement and arrangement of bone engaging elements 30, and a shape of bone engaging elements 30 is configured such that jaw bone anchor 100 will be centered inside drill hole DH of the jaw bone JB, to prevent bone compression by the outer osso-integrative shell 20 layer when jaw bone anchor 100 is placed inside drill hole DH, by preserving a gap GP between outer surface 22 of osso-integrative shell layer 20, and inner bone surface of drill hole DH. For example, this can be achieved by arranging bone engaging elements 30 circularly and substantially equi-angularly around outer surface 12 of core 10, and by having two or more bone engaging elements 30 per row, to row being arranged in an axial direction.

Moreover, the long sides of the rectangular base of pyramid is arranged to be parallel to center axis CA, and the short sides is arranged tangential to the outer surface 12 of inner core 10, perpendicular to center axis CA. With the reduced width of pyramids that form bone engaging elements 30 facing the bone structure of bone surface BS, such that a front apically-facing sloped surface 32 of pyramid engages with bone structures, jaw bone anchor 100 can be pushed into drill hole DH with jaw bone anchor 100 engaging to bone, by cutting, scratching, or grating against bone structures with less resistance, and at the same time the two long side sloped surfaces of the pyramids face the bone structures to prevent rotation of jaw bone anchor 100 around center axis CA. It is also possible that the pyramids that form bone engaging elements 30 are slanted, so that front apically-facing sloped surface 32 of pyramid that faces downwards towards jaw bone JB during insertion has a smaller slant angle relative to center axis CA, as compared to a slant angle of rear crown-facing sloped surface 34 relative to center axis, as further explained with respect to FIG. 16D.

In a variant, it is possible that bone engaging elements or teeth 30, also referred to as plurality of radially-extending bone engaging means, have a shape that is different from a pyramidal shape, but permitting to cut or otherwise mechanically engage with bone structures at bone surface BS when jaw bone anchor 100 is pushed into drill hole DH, and at the same time, once engaged with native bone, resisting rotational movements of jaw bone anchor 100. Generally speaking, bone engaging elements 30 can be chosen to have a radially-protruding structure that is narrower in width in a tangential directions relative to surface 22, and is comparatively longer in the axial direction with respect to center axis CA. Thereby, relatively speaking, an area of a side surface that resist a rotation of jaw bone anchor 100 is larger than an area front, apically facing surface or a rear, crown-facing surface of the structure, for easier engagement to bone structures. These shapes can include but are not limited to a blade or cutter-like shape with its longitudinal axis substantially parallel to a center axis CA, ramp-shaped bone engaging elements 30 with a surface of ramp arranged towards the apical side of jaw bone anchor 100, circularly-, oval-, elliptically-, or other round-shaped partial disks having a plane that is arranged radially relative to center axis, tetrahedron-shaped having two longer sides, tabs that are obliquely arranged to a center axis CA, ridge-like shapes.

As another example, FIG. 2B and FIG. 2C shows an exemplary perspective view of a jaw bone anchor 100 that has radially-protruding structuration elements formed as radially-protruding ridges 34 having a triangular cross-section, with an angular offset of 60° degrees between adjacent ridges. A front face of a side of ridge that faces the jaw bone JB forms a triangular surface that can be slanted by an angle relative to center axis CA for easier insertion and engagement with bone structures of bone surface BS. The arrangement of ridges 34 instead of bone engaging elements 30 in rows or lines can allow for easier insertion into drill hole DH of jaw bone JB, ridge 34 thereby forming a blade-like cutter structure that can cut into bone for preliminary primary stability before ossointegration, and at the same time substantially block a rotation or turning of jaw bone anchor 100 relative to jaw bone JB,

FIGs. 3A to 6C show different arrangements and embodiments of jaw bone anchors 100 with different numbers of rows or lines of pyramidal-shaped bone engaging elements 30, and different numbers of radially-protruding ridges 34, adjacent rows or ridges being equi-angularly and radially spaced apart.

FIG. 7 show perspective-top views of a jaw bone anchor 100, on the left side of showing the entire jaw bone anchors 100 with crown-facing opening 40, and on the right side showing a cut-off lower section of jaw bone anchors 100 for illustration purposes with a virtual cutting plane that is perpendicular to central axis CA, protruding pyramidal-shaped elements 30 as teeth that are spaced apart from each other equidistantly in an axially-tilted direction along the arrangement lines, but with an alternating arrangement of teeth 30 of adjacent axially-tilted arrangement lines around the central axis CA, such that teeth 30 of adjacent axially-tilted arrangement lines are offset to each other. This embodiment allows to distribute a pressure that is exerted by bone engaging elements 30 on jaw bone JB, without a concentration of the pressure along the lines or rows of arrangement of teeth 30.

FIGs. 8A and 8B show a side view (FIG. 8A) and a perspective-top view and a perspective-top cut view (FIG. 8B) of a jaw bone anchor 100 with relatively small-sized radial protrusion heights of teeth 30, FIGs. 9A and 9B show a side view (FIG. 9A) and a perspective-top view and a perspective-top cut view (FIG. 9B) of a jaw bone anchor 100 with relative mid-sized radial protrusion heights of teeth 30, and FIGs. 10A and 10B show a side view (FIG. 8A) and a perspective-top view and a perspective-top cut view (FIG. 10B) of a jaw bone anchor 100 with relative large-sized radial protrusion heights of teeth 30, to show differently-sized teeth that can be used for different bone structuration features of the target bone, for example depending on the age of the living being that is receiving a dental implant, or depending on the granularity, porosity or other structure of the target bone location.

FIGs. 11A, 11B, 11C, and 11D each show a perspective-top view on the left side and a perspective-top cut view on the right side of different jaw bone anchors 100 with ridges 34 having small-sized, mid-sized, or large-sized radial protrusion heights, respectively, FIGs. 12A and 12B show an exemplary perspective-top view on the left side and a perspective-top cut view on the right side of a jaw bone anchor 100 that show different densities or pitches of teeth along exemplary six (6) arrangement rows or lines, FIGs. 13A, 13B, and 13C show side views of different embodiments where the outer surface of jaw bone anchor 100 that face the jaw bone JB, along the root-facing portion, is cylindrically-shaped (FIG. 13A), is partially cylindrically-shaped at the crown-facing side and partially conically-shaped or tapered at the apical side (FG. 13B), is conically-shaped or tapered (FIG. 13C), and is randomly-shaped but having an increasing diameter of inner core 10 from the apical side to the crown-facing side, and with teeth or protrusions 30 of different size (FIG. 13D).

Moreover, FIG. 14 shows a side view of conically-shaped or tapered jaw bone anchor 100 indicating the different radial protrusion lengths as compared to central axis CA, with an increasing radial protrusion length of bone engaging elements 30 that are arranged closer to the crown-facing side, by virtue of the conical shape with an aperture angle of the cone-shaped surface of the root-facing portion of jaw bone anchor 100. In this respect, with such progressively increasing protrusion lengths of the radially protruding bone engaging elements 30, and a corresponding conically-shaped drill hole DH, a diameter of jaw bone anchor 100 being smaller by two (2) times GP at a corresponding location of diameter of drill hole DH, when jaw bone anchor 100 is fully inserted to drill hole DH. It is possible to insert jaw bone anchor 100 into drill hole DH such that tips 31 of bone engaging elements 30 substantially simultaneously engage with bone structures of bone surface BS when anchor 100 is pressed or pushed into hole DH, unlike a situation where the jaw bone anchor 100 is cylindrical, where one bone engaging element 30 after the other engages with bone surface BS, the most forward, front, or apical-side facing bone engaging element 30 being the first to engage with bone surface BS. This also allows to avoid that the most forward, front, or apical-side facing bone engaging element 30 partially destroys or otherwise weakens the bone structure at bone surface BS, such that the following bone engaging elements 30 that are arranged towards the crown side will have less secure bone engagement and anchoring to the weakened bone structure.

FIGs. 15A, 15B, and 15C show cross-sectional side views of jaw bone anchor 100 and jaw bone JB having different mechanical interfaces to for holding a crown, for example one with no neck for an exemplary bone level implant that is neatly fully inserted to the jaw bone JB (FIG. 15A), having a neck with an outer cylindrical surface as an exemplary tissue-level implant (FIG. 15B), and having a tulip-shaped polished neck as an exemplary tissue-level implant at the bone level implant (FIG. 15C). All of these three (3) variants are shown to be placed fully into drill hole DH, with conical or pointed tip 35 touching bone floor BF of drill hole DH, bone facing section of jaw bone anchors 100 all being conically-shaped. Bone engaging elements 30 are exemplarily shown to be symmetrically-shaped pyramids.

FIG. 16A to 16E show another embodiment of jaw bone anchor 200, combining features of conically- and cylindrically-shaped bone engaging structures, having a apical side with an upper cylindrically-shaped section CYS and a lower conically-shaped section COS, with FIG. 16A showing a top view thereof with neck 170 and crown attachment opening 140, FIG. 16B showing a side view thereof, and FIG. 16C showing a cross-sectional side view thereof, and FIG. 16D showing a close-up cross-sectional view of bone engaging element 130. When described with reference to an apical side towards the jaw bone facing side, at an apical end a conically-shaped pointed tip 135 is arranged, having a first aperture angle α1 of the conical surface that can be more than 45°, tip 135 preferably for example made of an osso-integrative structure, followed by a conically-shaped section COS that includes an osso-integrative wall 124 that has an outer surface 126 having a conical shape, the conically-shaped section having a second aperture angle α2 that is substantially smaller than the first aperture angle α1, preferably an angle that is smaller than 25°, more preferably in a range of 2° to 20°. Radially and angularly spaced apart by an angle of 120°, three (3) bone engaging elements 130 are shown, having an axially-extending longitudinal ridge-like shape, and having front apically-facing sloped surface 132 and a rear crown-facing sloped surface 134, with the front apically-facing sloped surface 132 having a front slope angle β1 that defined as an angle between a center axis CA and a plane that coincides with surface 132 that is smaller than a rear slope angle β2 of the rear crown-facing sloped surface 134, as shown in FIG. 16D. In the variant shown, front slope angle β1, is about 45°, while rear slope angle β2 is about 70°.

It is also possible that rear slope angle is 90° or more, such that rear crown-facing sloped surface 134 is arranged perpendicular to center axis CA, or such that surface 134 forms a hook-like, ramp-like, claw-like, clip-like, or grapnel structure, for the primary stability and fastening with the bone, as depicted on the FIG 16E. For example, on the left side of FIG. 16E, bone engaging elements 30 are shown having a ridge-like shape that has a progressively increasing height H2 towards the crown facing side. On the right side, bone engaging elements 30 are shown forming tabs that are slanted towards the crown-facing side, for easy insertion and attachment by flexibly tabs that can elastically bend radially inwardly. Also, ramp-shaped and hook-shaped bone engaging elements 30 are shown.

Following the conically-shaped section COS, a cylindrically-shaped section CYS is arranged, having a diameter that is equal to a largest diameter of conically-shaped section COS, the outer surface 126 of the COS and outer surface 122 of osso-integrative wall 120 of CYS continuously arranged with no edge, recess, or other discontinuity between the outer surfaces 122, 126 of COS and CYS, respectively. Towards an upper edge of cylindrically-shaped section CYS, radially and angularly spaced apart by an angle of 120°, three (3) bone engaging elements 130 are shown, having an axially-extending longitudinal ridge-like shape, in the variant shown having the same shape as the ones located on the conically-shaped section COS, but being oriented to be parallel with the central axis CA, and outer surface 122 of cylindrically-shaped section CYS. Both osso-integrative wall 120 that is cylindrically shaped, and osso-integrative wall 124 that is conically shaped are both made to have a porous structure, for example a trabecular structure. In the variant shown, a thickness of the layers 120, 124 is about 0.4 mm, having a trabecular porous structure with a porosity of 50% per volume, and an average pore size between 300 µm and 400 µm. In contrast thereto, core 110 and bone engaging elements 130 are made of solid material.

Bone engaging elements 130, with their longitudinal ridge-like shape, can form a sharp edge at the ridge, to provide for a cutting edge that allows to cut into the bone, with the lateral side walls allowing to engage with bone, preventing rotation and providing for the primary stability of jaw bone anchor 200 to drill hole DH. In a variant, front apically-facing sloped surface 132 can be made of two surfaces arranged at a relatively acute angle towards each other, for example 45° or less, to provide for a cutting edge facing the bone structure to facilitate engagement and anchoring with bone structure of jaw bone JB.

Next, the dimensions and their function for the placement and ossointegration of jaw bone anchor 200 into a drill hole DH is explained, as exemplarily illustrated in FIG. 16B, and a method of providing a jaw bone anchor 200 to a jaw bone of a living being. First, a drill hole DH is drilled into jaw bone JB with a drill bit such that a drill hole DH of a certain desired shape and dimension is formed into jaw bone JB. Drill hole DH is formed having a lower conically-shaped bore or drill hole for accommodating tip 135 forming bone floor BF of drill hole DH, to be substantially complementary in dimensions and shape with tip 135, having a middle conically-shaped bore hole for accommodating the conically-shaped section COS, and having an upper cylindrically-shaped bore hole for accommodating cylindrically-shaped section CYS. A diameter of upper cylindrically-shaped bore hole is chosen to be somewhat larger than a diameter of a cylinder formed by outer surface 122 of osso-integrative wall 120, so that a cylindrically-shaped gap GP is formed between outer surface 122 and bone surface BS of the cylindrical part of drill hole DH. In FIG. 16B, the diameter of outer surface 122 of osso-integrative wall 120 is chosen to exemplarily be 3.4 mm. In addition, the diameter of upper cylindrically-shaped drill hole DH can be chose such that it is smaller than a diameter formed by a circle that coincides with a radially outermost point of the three (3) bone engaging elements 130 of conically-shaped section COS, this diameter exemplary shown as being 3.5 mm. In this example, the diameter of the upper cylindrically-shaped drill hole DH is chosen to be between 3.4 mm and 3.5 mm, preferably about 3.5 mm, this variant being shown in the cross-sectional view of FIG. 16C at the final osso-integration position of jaw bone anchor 200. Thereby, a gap GP between bone surface BS and cylindrical surface 122 is about 0.05 mm. With such arrangement, an outer tip or ridge of bone engaging elements 130 of conically-shaped section COS will mechanically engage and cut into bone surface BS of the cylindrical part of drill hole DH upon insertion of jaw bone anchor 200.

However, in a variant, the diameter of the upper cylindrically-shaped bore hole is chosen to be larger than 3.5 mm, in other words larger than a diameter formed by a circle that coincides with a radially outermost point of the three (3) bone engaging elements 130 of conically-shaped section COS, but still less than a diameter formed by a circle that coincides with a radially outermost point of the three (3) bone engaging elements 130 of cylindrically-shaped section CYS, being less than the exemplary 3.9 mm, for example between 3.6 mm and 3.7 mm, so that bone engaging elements 130 of conically-shaped section COS may only or do not touch bone surface BS of the cylindrical part of drill hole DH upon insertion of jaw bone anchor 200, but will only engage with bone surface BS of the middle conical part of drill hole DH. This configuration is preferably used when anchor 200 crosses two different bone densities along the central axis towards the jaw bone JB, for example where the crestal cortical bone is traversed first, having a high bone density, and thereafter the spongious cancellous bone is accessed for anchoring, having a low bone density as compared to the crestal cortical bone. In this respect, at the final placement position, anchor 200 can be configured such that CYS lies substantially within the crestal cortical section, while COS lies substantially within the cancellous bone. In this respect, different anchors 200 can be manufactured for different placements and patients, depending of the depth of crestal cortical section of jaw bone JB. However, bone engaging elements 130 of cylindrically-shaped section CYS will engage and cut into the bone structure at bone surface BS of cylindrically-shaped bore hole only once these bone engaging elements 130 reach the upper edge of drill hole DH.

In either variant, as only bone engaging elements 130 of cylindrically-shaped section CYS will more profoundly engage with cylindrically-shaped bore hole, and only bone engaging elements 130 of conically-shaped section CYS will more profoundly engage with conically-shaped bore hole, it is possible to first insert jaw bone anchor 200 with a first pressure partially into drill hole DH, until at least one of upper bone engaging elements 130 of cylindrically-shaped section CYS abut against upper edge of drill hole DH, or lower bone engaging elements 130 of conically-shaped section COS engage with a bone surface BS of the conical section of drill hole, or both. Next, with a second pressure that is higher than the first pressure, jaw bone anchor 200 can be pressed into its final position for ossointegration, such that a surface of tip 135 abuts against bone floor BF of drill, hole DH, and bone engaging elements 130 will be pressed and cut into bone structure at bone surface BS. This two steps can be done manually by an operator or dental surgeon.

With respect to the manufacturing of the jaw bone anchor 100, 200, it is possible that core 10 and protruding elements 30 are machined from a solid piece of material, for example titanium or titanium based material, an thereafter, a porous, osso-integrative shell layer 30 is deposited by a three-dimensional printing method to an outer surface 12 of core 10, for example as described in U.S. Patent Publication No. 2020/0100874 where an osso-integrative layer is deposited by a three-dimensional printing method to an interface layer, this reference herewith incorporated by reference in its entirety. As a variant, it is possible that a core 10 is provided by machining with a lathe, and thereafter both protruding elements 30 as solid material and osso-integrative shell layer 30 as an at least partially porous layer are deposited by three-dimensional printing. Moreover, it is also possible that an manufacturing element is formed by machining, include neck 70, opening 40, and an attachment element or mechanism 45, and including a longitudinal cylinder or tapered section that has similar dimensions and length of the final dimensions of anchor 100 is formed. Subsequently, core 10, protruding elements 30, and osso-integrative shell layer 20 are three-dimensional printed in this order by rotating neck 70 and pre-formed cylinder or tapered section. In this respect, core 10 forms a cylindrical or tapered lumen around the pre-formed cylinder or tapered section. In another variant, neck 70, core 10, protruding elements 30, and osso-integrative shell layer 20 are all three-dimensional printed, and thereafter opening 40, and an attachment element or mechanism 45 are machined into neck 70. In another variant, neck 70 and opening 40 are machined from a solid piece, core 10 and structure 20 are then three-dimensionally printed on neck 70. Thereafter, attachment mechanism 45 is machined and placed into neck 70 during or after the step of three-dimensional printing.

While the invention has been disclosed with reference to certain preferred embodiments, numerous modifications, alterations, and changes to the described embodiments, and equivalents thereof, are possible without departing from the sphere and scope of the invention. Accordingly, it is intended that the invention not be limited to the described embodiments, and be given the broadest reasonable interpretation in accordance with the language of the appended claims.

## Claims

1. A jaw bone anchor for threadless engagement with a jaw bone, the jaw bone anchor having an apical side, a crown-facing side, and having a root section, comprising:
an inner core having a longitudinal extension along the root section;
an outer osso-integrative shell layer that is arranged around the inner core; and
a plurality of radially-extending bone engaging elements, the radially-extending bone engaging elements extending from the inner core, traversing and protruding from the outer osso-integrative shell layer.

2. The jaw bone anchor according to claim 1, wherein the a plurality of radially-extending bone engaging elements include at least one of teeth or longitudinal ridges.

3. The jaw bone anchor according to claim 1, wherein a count, shape, and arrangement of at least some of the plurality of radially-extending bone engaging elements are arranged such that the jaw bone anchor will be centered inside drill hole of the jaw bone, to prevent bone compression by the outer osso-integrative shell layer when jaw bone anchor is placed inside drill hole.

4. The jaw bone anchor according to claim 1, further comprising:
an opening at the crown-facing side; and
an attachment mechanism that is accessible via the opening for attachment of at least one of a dental abutment or a crown.

5. The jaw bone anchor according to claim 1, wherein at least a portion of the bone-facing outer surface of the outer osso-integrative shell layer is porous.

6. The jaw bone anchor according to claim 4, wherein the porous portion of the outer osso-integrative shell layer has a trabecular structure.

7. The jaw bone anchor according to claim 1, wherein the inner core is solid, and the radially-extending bone engaging elements are integrally formed with the inner core.

8. The jaw bone anchor according to claim 1, wherein a portion of the root section of the bone-facing outer surface of the osso-integrative shell layer forms a conical surface, an aperture angle of a cone formed by the conical surface is less than 25°.

9. The jaw bone anchor according to claim 1, wherein a portion of the root section of the bone-facing outer surface of the osso-integrative shell layer forms a cylindrical surface.

10. The jaw bone anchor according to claim 1, wherein one portion of the root section of the bone-facing outer surface of the osso-integrative shell layer forms a conical surface, and another portion of the root section of the bone-facing outer surface of the osso-integrative shell layer forms a cylindrical surface.

11. A dental implant system including a crown, a dental abutment, a jaw bone anchor for threadless engagement with a jaw bone, and an attachment device for attaching the dental abutment to the jaw bone anchor, the jaw bone anchor having an apical side, a crown-facing side, and having a root section, the jaw bone anchor comprising:
an inner core having a longitudinal extension along the root section;
an outer osso-integrative shell layer that is arranged around the inner core;
a plurality of radially-extending bone engaging elements, the radially-extending bone engaging elements extending from the inner core, traversing the outer osso-integrative shell layer; and
an attachment mechanism that is accessible via the crown-facing side for attachment of the dental abutment with the attachment device.

12. The dental implant system according to claim 11, wherein at least a portion of the bone-facing outer surface of the outer osso-integrative shell layer is porous.

13. The dental implant system according to claim 12, wherein the porous portion of the outer osso-integrative shell layer has a trabecular structure.

14. The dental implant system according to claim 11, wherein the inner core is solid, and the radially-extending bone engaging elements are integrally formed with the inner core.

15. A jaw bone anchor for a dental implant, the jaw bone anchor having an apical side, a crown-facing side, and having a root section, comprising:
an inner stabilizing means extending along the root section;
an outer osso-integrative means surrounding the inner stabilizing means; and
a plurality of radially-extending bone engaging means, the radially-extending bone engaging means extending from the inner stabilizing means and traversing and protruding from the outer osso-integrative means,
wherein the inner stabilizing means and the plurality of radially-extending bone engaging means are configured to provide for a primary stability of the jaw bone anchor before osso-integration.

16. The dental implant system according to claim 15, wherein at least a portion of a bone-facing outer surface of the outer osso-integrative means is porous, and the inner stabilizing means and the radially-extending bone engaging means are made of solid material.
